# EUROPEAN PATENT SPECIFICATION

(11) **EP 1 479 232 B1**
(45) Date of publication and mention of the grant of the patent: **28.09.2011**
(21) Application number: 03709351.5
(22) Date of filing: 27.02.2003
(51) Int. Cl.: H04N 7/16, H04N 5/00

(54) **A METHOD AND APPARATUS FOR PROVIDING A HIERARCHICAL SECURITY PROFILE OBJECT**
VERFAHREN UND VORRICHTUNG ZUR BEREITSTELLUNG EINES HIERARCHISCHEN SICHERHEITSPROFILOBJEKTS
PROCEDE ET APPAREIL PERMETTANT D'OBTENIR UN OBJET A PROFIL DE SECURITE HIERARCHIQUE

(30) Priority: 27.02.2002 US 360100 P
(43) Date of publication of application: 24.11.2004
(73) Proprietor: Opentv, Inc., San Francisco, CA 94111 (US)
(72) Inventor: KIDD, Taylor, W., Redwood City, CA 94062 (US)
(74) Representative: Freeman, Jacqueline Carol
(86) International application number: PCT/US2003/005824
(87) International publication number: WO 2003/073762

(56) References cited:
- WO-A-00/30345
- WO-A-99/66714
- EVAIN J-P: "THE MULTIMEDIA HOME PLATFORM" EBU REVIEW- TECHNICAL, EUROPEAN BROADCASTING UNION. BRUSSELS, BE, no. 275, 21 March 1998 (1998-03-21), pages 4-10, XP000767493 ISSN: 0251-0936
- SUN MICROSYSTEMS ET AL: "Java TV API Specification" JAVA TV API SPECIFICATION, 14 June 1999 (1999-06-14), pages 1-27, XP002143725 Palo Alto Retrieved from the Internet: <URL:http://java.sun.com/products/javatv/j avatvspec0_9_0.html> [retrieved on 2000-07-27]

## Description

### BACKGROUND OF THE INVENTION

### Field of the Invention

This invention relates to security in interactive television and, more particularly, to hierarchical security profile management for programs, services and other applications transmitted in an interactive television environment.

### Description of the Related Art

The latest forms of television broadcast communication include the possibility of interactive television in which not only does the broadcaster send its programs to the viewer, but the viewer may also send information back to the broadcast source or emitter. Content from the broadcaster typically includes network programs and commercials, as well as web pages, interactive televised programs, graphics and text, and other items. Without restriction, the viewer at the same time may request information from the broadcaster or send data via the television device. Users or viewers may interact with the systems in various ways including, for example, ordering advertised products or services, chatting with other viewers, requesting specialized information regarding particular programs, or navigating through pages of information.
WO 99/66714 relates to system where security restrictions are tied to the current state/context of a receiving device. A security policy may further define conditions which can be checked at the time a protection function is attempted.

Generally speaking, at one end of this broadcast communication stream is a client integrated receiver/decoder (IRD), such as a set-top box (STB), which receives the transmitted content from a server or head- end. The head-end, generally a network operator in an interactive television environment, collects the signals from various networks (e. g. CNN, ESPN, etc. ) and transmits them to its clients (e. g. STBs) along with a variety of additional content including E-Commerce services and interactive programs. The STB connects to the television set and typically sits on top of it. This IRD operates computer programs referred to herein as middleware which controls the flow of transmitted programs, interactive programs and internet traffic transmitted from the server head- end as well as datasent/received by the viewer to the head-end via the IRD. The IRD is generally configured to handle the bi-directional flow of data. In an interactive environment some programs provide for strictly one-way communications, other programs provide for two-way communications, and still other programs provide optional modular programs through which the viewer might gain further information on a point of interest. Due to the integration of many different media formats, the IRD may also be able to recognize the different media formats of the content, such as the difference between the form and protocol of a web page, and that of a television commercial.

Furthermore, due to the fact that each type of communication for each program has its own level of interaction and/or its own protocol, it may be desirable to require a particular level of security in order to identify the allowed level of interaction for a program and maintain the integrity of the communication. Due to the interactive nature of the medium, it is desirable to define a security policy to regulate the type of access available to a viewer and the level at which viewer programs running on the IRD may interact with other entities, such as the head-end server, and other clients and with each other.

In the past, either the security policy was fixed, i.e., hardwired into the IRD, or the head-end server formulated and provided a security policy for controlling the access of programs (e.g. such as an XML declaration in a file associated with each program downloaded from the server to the client IRD). The security policy relating to programs running on the IRD was typically defined by a policy maker. A Security Manager, a program running on the IRD, then moderated the services that the IRD performed relative to the provided security policy.

Several security policies paradigms exist in prior art. One example of such a paradigm, the JAVA TV API, includes the JAVA 2 Platform Security Architecture, which defines a framework consisting of security related APIs for enforcing a security policy in a JAVA execution environment. The JAVA TV API does not dictate a particular security model or policy, but uses the JAVA development Kit (JDK) 1.2 security architecture to express the security policies that are provided by the application environment. This solution provides architects, such as network operators and standards organizations, the freedom to redefine their security models as future needs change. The JAVA 2 Platform Security Architecture does not mandate a format for the Security Policy though it does provide an example/default implementation. This example implementation provides a system-wide security policy and a user-specific policy file. In the digital television enviromnent, Digital Video Broadcasting's (DVB's) Multimedia Home Platform (MHP) and the Advanced Television Systems Committee's (ATSC) Digital Television Application Software Environment (DASE) are both based on JAVA TV technology.

Another example of a prior art security policy implementation paradigm may be found in the Multimedia Home Platform (MHP) 1.0 and 1.1 specifications (which are specific instantiations of the JAVA 2 Platform Security Architecture discussed above). The resource access policy for MHP is derived from the access rights requested by the broadcaster or head-end and access rights granted by the user. This method defines a format for a security policy on a per application basis via a "permission request file". The permission request file defines those resources that the associated application can access.

Yet another method for designating security permissions is the Digital TV Application Software Environment (DASE). The DASE Level 1 draft specification defines two policy files, one being a broadcaster's permissions file and the other applying specifically to the individual applications. The broadcaster permissions file applies to all downloaded applications executed and typically defines those operations the broadcaster will permit an application to execute. The application's permission file defines specifically which resources to which an application can request access. The actual security policy implemented by the IRD is the intersection of the broadcaster and application's permission files. The overall security profile consists of the broadcaster's policy and of the specific policy associated with the application. This approach provides a two-level security implementation wherein both files are transmitted and are specifically associated with each individual application or program by the Security Manager.

In the interactive television environment, communication bandwidth and processing capability are limited in the typical client. In addition, there are numerous different types of applications, each of these types potentially requiring their own distinct set of security permissions. Thus, there is a need for efficient and flexible method and apparatus for implementing a security policy that enables customized security policies for different applications.

### SUMMARY OF THE INVENTION

According to the present invention there is provided a method for specifying and managing a hierarchical security policy in an interactive television system, said method comprising: formulating a security policy for applications which may execute on a client device of the computing system, wherein formulating said policy comprises (i) identifying a plurality of said classes to which said applications may correspond, (ii) assigning to each of said classes restrictions and/or privileges that a given application within the corresponding class has to access one or more resources of a client device upon which the given application executes, and (iii) organizing the classes into a hierarchy with two or more levels, the hierarchy comprising parent classes and child classes, wherein a child class of a given parent class represents a subclass of the parent class; creating a hierarchy security program object (HSPO) that represents said security policy, wherein the HSPO includes a node for each class of the plurality of classes, wherein said nodes are organized as a hierarchical security inheritance structure that corresponds to said hierarchy, each level of the structure including one or more nodes which define a class of applications and a corresponding set of restrictions and/or privileges that a given application within the corresponding class has to access one or more resources of a client device upon which the given application executes, wherein the nodes are structured in parent and/or subordinate node relationships with other nodes, and wherein nodes are configured to inherit restrictions and/or privileges of ancestor nodes whereby restrictions and/or privileges of ancestor nodes are added to those of the inheriting node; transmitting the HSPO from a server to a client device; storing the transmitted HSPO in a client device; in response to detecting execution of a first application in the client device: determining a first class of the plurality of classes to which the first application belongs; identifying one or more classes and corresponding nodes defined by the HSPO which encompass the first class; identifying restrictions and/or privileges defined by the identified corresponding nodes; formulating a set of restrictions and/or privileges, wherein said set of restrictions and/or privileges comprises a union of restrictions and/or privileges defined by the corresponding nodes; assigning the set of restrictions and/or privileges to the first application; and enforcing the set of restrictions and/or privileges on the first application.

According to a further aspect there is also provided one or more computer readable media comprising program instructions for specifying and managing a hierarchical security policy in an interactive television system, wherein the program instructions are executable to: create a hierarchical security program object (HSPO) that represents a security policy for applications which may execute on a client device of the computing system, wherein the HSPO includes a node for each class of the plurality of classes to which said applications may correspond, each of said classes being assigned restrictions and/or privileges that a given application within the corresponding class has to access one or more resources of a client device upon which the given application executes, wherein the classes are organized into a hierarchy with two or more levels, the hierarchy comprising parent classes and child classes, wherein a child class of a given parent class represents a subclass of the parent class; wherein said nodes are organized as a hierarchy security inheritance structure that corresponds to said hierarchy, each level of the structure including one or more nodes which define a class of applications and a corresponding set of restrictions and/or privileges that a given application within the corresponding class has to access one or more resources of a client device upon which the given application executes, wherein the nodes are structured in parent and/or subordinate node relationships with other nodes, and wherein nodes are configured to inherit restrictions and/or privileges of ancestor nodes; transmit the HSPO from a server to a client device; store the transmitted HSPO in a client device; in response to detecting execution of a first application in the client device: determining a first class of the plurality of classes to which the first application belongs; identify one or more classes and corresponding nodes defined by the HSPO which encompass the first class; identify restrictions and/or privileges defined by the identified corresponding nodes; formulate a ste of restrictions and/or privileges, wherein said set of restrictions and/or privileges defined by the corresponding nodes; assign the set of restrictions and/or privileges to the first application; and enforce the set of restrictions and/or privileges on the first application.

According to a further aspect there is provided an interactive television system for specifying and managing a hierarchical security policy, said system comprising: a server configured to: create a hierarchical security programme object (HSPO) that represents a security policy for applications which may execute on a client device of the system, wherein the HSPO includes a node for each class of a plurality of classes to which said applications may correspond, each of said classes being assigned restrictions and/or privileges that a given application within the corresponding class has to access one or more resources of a client device upon which the given application executes, wherein the classes are organized into a hierarchy with two or more levels, the hierarchy comprising parent classes and child classes, wherein a child class of a given parent class represents a subclass of the parent class; wherein said nodes are organized as a hierarchical security inheritance structure that corresponds to said hierarchy, each level of the structure including one or more nodes which define a class of applications and a corresponding set of restrictions and/or privileges that a given application within the corresponding class has to access one or more resources of a client device upon which the given application executes, wherein the nodes are structured in parent and/or subordinate node relationships with other nodes, and wherein nodes are configured to inherit restrictions and/or privileges of ancestor nodes; transmit the HSPO; a client device configured to: receive the transmitted HSPO; store the transmitted HSPO in the client device; in response to detecting execution of a first application in the client device: determine a first class of the plurality of classes to which the first application belongs; identify one or more classes and corresponding nodes defined by the HSPO which encompass the first class; identify restrictions and/or privileges defined by the identified corresponding nodes; formulate a set of restrictions and/or privileges, wherein said set of restrictions and/or privileges comprises a union of restrictions and/or privileges defined by the corresponding nodes; assign the set of restrictions and/or privileges to the first application; and enforce the set of restrictions and/or privileges on the first application.

According to a yet further aspect there is provided a device for use in an interactive television system, the device comprising: a receiver configured to receive a hierarchical security program object (HSPO) that represents a security policy for applications which may execute on the device, wherein the HSPO includes a node for each class of plurality of classes to which said applications may correspond, each of said classes being assigned restrictions and/or privileges that a given application within the corresponding class has to access one or more resources of the device upon which the given application executes, wherein the classes are organized into a hierarchy with two or more levels, the hierarchy comprising parent classes and child classes, wherein a child class of a given parent class represents a subclass of the parent class; wherein said nodes are organized as a hierarchical security inheritance structure that corresponds to said hierarchy, each level of the structure including one or more nodes which define a class of applications and a corresponding set of restrictions and/or privileges that a given application within the corresponding class has to access one or more resources of the device upon which the given application executes, wherein the nodes are structured in parent and/or subordinate node relationships with other nodes, and wherein nodes are configured to inherit restrictions and/or privileges of ancestor nodes; storage configures to store the HSPO; wherein in response to detecting execution of a first application, the device is configured to: determine a first class of the plurality of classes to which the first application belongs; identify one or more classes and corresponding nodes defined by the HSPO which encompass the first class; identify restrictions and/or privileges defined by the identified corresponding nodes; formulate a set of restrictions and/or privileges, wherein said set of restrictions and/or privileges comprise a union of restrictions and/or privileges defined by the corresponding nodes; assign the set of restrictions and/or privileges to the first application; and enforce the set of restrictions and/or privileges on the first application.

A broadcaster security policy that may be imposed by a policy maker upon a class of entities in an interactive television environment is disclosed. A general policy is defined for a class of entities. A specific policy may also be defined for any subclass of entities, such as the grouping of advertisements or programs. A specific policy may be defined for any given entity, such as a specific television program as an exception to a class. Thus, the hierarchical security program object described herein may be more efficient and more general than known security specifications which define security and security permissions separately in a file provided along with each individual application.

### BRIEF DESCRIPTION OF THE DRAWINGS

Figure 1 is a diagram illustrating one embodiment of the distribution of interactive television applications, television programs, and system information from a head-end source server to a client.

Figure 2 illustrates one embodiment of a service platform head-end server and client communication.

Figure 3 is a diagram illustrating one embodiment a hierarchical security profile object.

Figure 4 illustrates one embodiment of a security policy as applied to an application.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DETAILED DESCRIPTION

In a typical program structure for interactive television, the presentation of network programs and interactive applications and events are controlled by computer. Television shows and advertisements are specific instances of data and computer applications. The television shows themselves are typically encoded in MPEG format. In addition, the broadcaster may also insert computer programs into the transmitted stream for download to the client IRD through which the viewer may interact with the application and/or make viewing decisions. Given that the client IRD may execute a transmitted program, the network must consider the risk of sabotage and both intentional and unintentional mischief. It is necessary to be careful not to inadvertently transmit or enable transmission of either a TV or computer virus. Each inserted program or application has different levels of required or permissible interaction with the viewer and the hosting client (i. e. IRD). It is generally preferable to disable capabilities that may be not needed or desired during an application's execution, but which, if otherwise allowed could be disruptive to communications or to the integrity of the operating environment and data at both the head-end server and/or the client.

In one embodiment, a server transmits the security restrictions or permissions to a receiver client (e.g. STB) that the server wishes to impose on the client by transmitting a hierarchical security policy object (HSPO) to the client. The HSPO provides a security inheritance structure. In one embodiment, the HSPO may be one object (e.g. a single file) but may alternatively be distributed across many such objects. In one embodiment, the HSPO may be organized as a tree with one root. The root of the HSPO tree contains the most general and universal security restrictions and exceptions such as the security restrictions for the head-end which are enforced on all networks and content transmitted by the server, for example. Successive nodes branching off of the HSPO root contain more specific security requirements, the level of specificity increasing with the increasing distance or "order" of the nodes away from the root.

Each node of the HSPO tree represents a class or subclass of applications and the additional restrictions, or additional privileges, which the client receiver is to impose or grant to entities such as applications in the corresponding class or subclass. The final set of restrictions/privileges that is imposed/granted to a given application are derived (typically by a security manager with a receiving IRD) from this HSPO by following a defined procedure for combining the appropriate nodes of the HSPO tree along with any additional restrictions imposed by the client (i.e. IRD). Thus, an application inherits the security attributes of the class to which it belongs and all the security attributes of predecessor nodes in the HSPO tree. For example, in one embodiment, the lowest node in the tree corresponding to the application is identified and a union of all the restrictions/privileges of this node's ancestor nodes is performed. This structure may prove efficient in that the implementation of a new application, by design, requires the specification of a smaller set of security requirements at the time of implementation. That is, only exceptions to the existing security policy need be specified for a group of applications or an individual application. Accordingly, arbitrary types of applications may have a uniform set of security requirements automatically imposed.

Nodes branching off of the HSPO root node may represent a network or a class of applications, such as advertisements or network programs, and nodes subordinate to these nodes segment these security classes into further subclasses. Generally, the security level at one class level is more or less restrictive than its parent class. Security levels can also vary at the same class level.

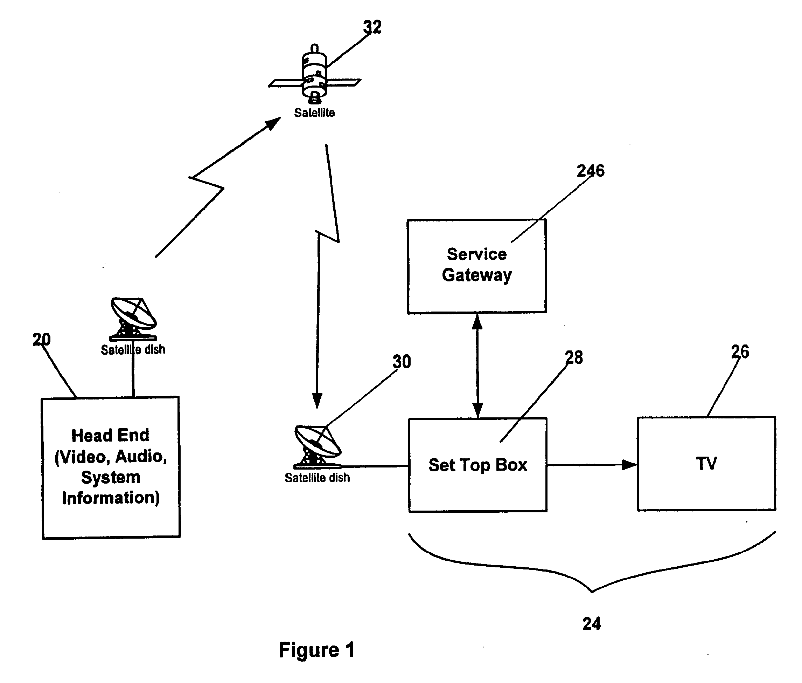

Turning now to Figure 1, a diagram illustrating one embodiment of an architecture for the transmission or distribution of interactive television applications, television programs (audio and video) and system information (e.g. number of services, service names, event names, event schedules) including the HSPO from a source head-end server to a viewer STB is shown. The HSPO may be transmitted or broadcast once or periodically to the clients. Alternatively, the HSPO may be programmed into the client memory at the manufacturer, downloaded from the Internet, installed via a computer readable medium, or received via a peer-to-peer (PTP) connection or email. The system includes a head-end server 20, which may be coupled with a video and audio device (not shown) that feeds a particular video with associated audio to the head-end. The audio-video-interactive signal contains television programs or similar audio-video content, as well as other signals associated with interactive content such as control signals, system information, HSPO and interactive applications. The video information may be digitized at the head-end 20 and transmitted via a transmitter to a client receiving system 24. The information transmitted by the head-end server 20 is transmitted to the receiving system 24 in various ways. For example, the transmitted information may be sent to the receiving system 24 via a transmitted signal such as a satellite transmission. The receiving station 24 is also be configured to receive signals via a modem channel, cable or terrestrial airwaves. The client receiving system 24 may comprise, for example, a television 26 connected to a set top box 28, a palm computer or a cellular phone (not shown). If satellite transmission is used, the STB 28 may include a receiving antenna 30 for receiving information from a satellite 32. The receiving station antenna 30 passes the interactive television signal to the client (e.g. STB 28), which performs the processing functions of the receiving station 24. Once information is received through the receiving antenna 30, it may be processed by the client (e.g. STB 28) and displayed on the television set 26. In this manner, audio, video, and interactive data may be received and processed by the STB 28. The signals transmitted via the broadcast or modem channels embody various modules which comprise components of an interactive application. The modules contain any type of data such as application code, raw data, or graphical information, for example.

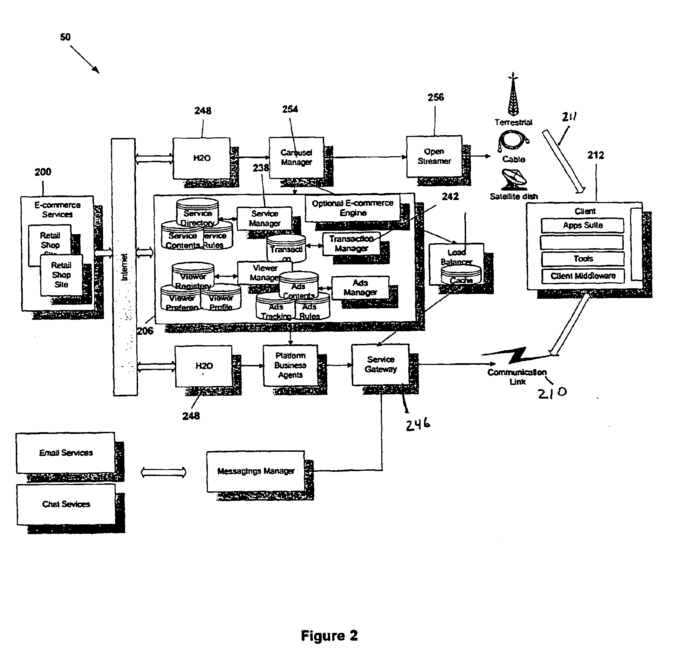

System information provided to the set top box 28 also includes a list of services (e.g. CNN, MTV, ESPN) available to a viewer, event names (e.g. Dateline, Star Trek), and a schedule of the events (e.g. start time/date and duration). The service gateway 246 provides a communication link between the client (e.g. STB 28) and service platform (head-end server) 50 of Figure 2.

Using a hierarchical security policy object (HSPO) to impose security restrictions or permissions on a receiver client (e.g. STB 28 of Figure 1) may be useful in any distributed computing system having a server for determining a security policy for one or more client devices. In one embodiment, the distributed computing system comprises an interactive television system, as described below in conjunction with the description of Figure 2.

Turning now to Figure 2, an illustration of one embodiment of a head-end server Service Platform (SP) 50 environment from which the policy maker and HSPO may be formulated and broadcast is shown. It is noted however, that the policy maker may alternatively reside in an STB such as STB 28 of Figure 1. Services 200 may provide shopping, chat, and other services through a communication link such as the internet or other network or communication channels accessible to a network operator. The SP 50 in turn communicates with a client 212 via one or more communication links 211. The client 212 may be a STB, a digital assistant, a cellular phone, or any other communication device capable of communicating with the SP 50 through communication link 210. Using the SP 50, the network operator may access services 200. Business functions 206, comprising service manager 238, interact with carousel manager 254 to retrieve content from a service 200. The carousel comprises a repeating stream of audio/video/interactive data broadcast to clients from the SP 50. Carousel manager 254, transaction manager 242 and service manager 238 control the content insertion and deletion from the broadcast carousel.

In one embodiment, the HSPO creation and policy maker functionality may exist in the service manager 238. In an alternative embodiment, the HSPO policy maker functionality may be located in the client. Service content may be retrieved and converted into a SP suitable format by H2O 248. For example, H2O 248 may be configured to convert HTML content into SP/client readable content. The converted content is formatted into a data carousel and multiplexed by the Open Streamer 256 for broadcast to the client 212. Client 212 interacts with the services and, if necessary and permitted by the HSPO, communicates with the SP 50 and the services 200. Point to Point (PTP) communication between the STB and SP goes through service gateway (SGW) 246.

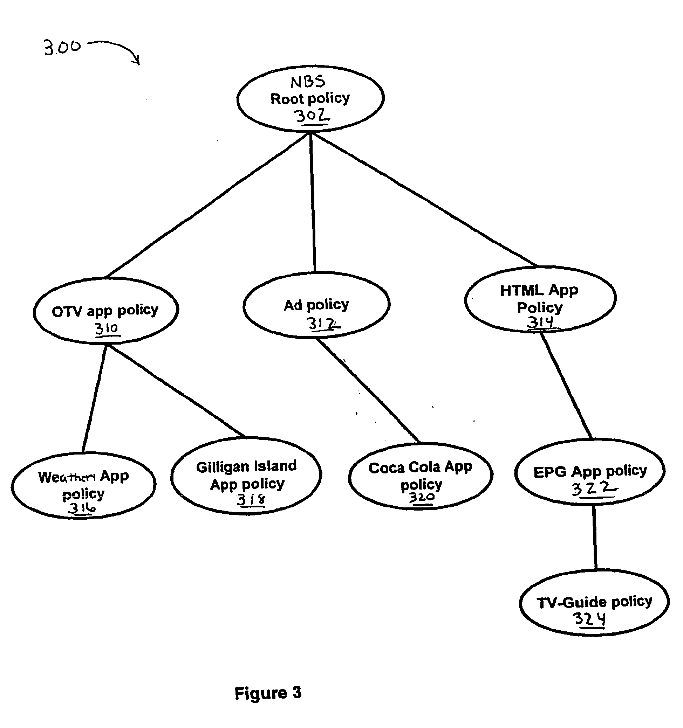

Turning now to Figure 3, a tree structure diagram of one embodiment a hierarchical security profile object (HSPO) is shown. HSPO 300 may be an HSPO for an exemplary broadcaster network NBS. The head-end formulates the HSPO 300 for NBS and transmits it to all of its viewers/receivers or client/STBs. NBS root policy 302 divides its applications into 3 groups/classes: "OTV App Policy" 310, "Ad Policy" 312, and "HTML App Policy" 314. A fourth class may exist implicitly and by default, and consists of all those applications not included in the other three explicitly defined classes, In the illustrated embodiment of Figure 3, the "OTV App Policy" 310 class contains entries for two applications, "Weather App policy" 316 and "Gilligan's Island App Policy" 318. The "Ad Policy" 312 class includes a "Coca Cola™ App Policy" 320. The "HTML App Policy" 314 class is further subdivided into Electronic Program Guide (EPG) App Policy 322 under which the broadcaster defines additional special restrictions for the "TV-Guide Policy" 324 application.

Generally speaking, the security policies at the NBS level 302 are to be applied to all members of the same class and subordinate classes. Thus for the NBS network level 302 which would be below the head-end level, the security policy set by the policy maker is defined by NBS. At this level, a high degree of security is imposed. Typically, each group level of application type imposes different security based on the specific desired and selected security requirements for each group. For example, due to their trustworthy nature, applications within the "OTV App Policy" 310 class, which in one embodiment are written in "C" code, are permitted a less restrictive security policy than those within the "Ad Policy" 312 class. This is because the OTV applications come from a trustworthy source and are deemed less risky. Thus, OTV applications may be afforded a more permissive, less restrictive set of security restrictions. Similarly, applications at the same class level may have differing levels of security. For instance, the "Weather App Policy" 316 application might be allowed more capabilities, due to its trustworthy character from a known source, than the "Gilligan's Island App Policy" 318 application, which may originate from a syndicated external source and thus deemed less trustworthy.

In this example, we assume the receiver/client STB already has a copy of the HSPO 300 either previously transmitted from the head-end, downloaded from the internet or programmed into client memory. When the TV station requests that the receiver start up the application associated with, for example, the "Coca Cola™" advertisement, the IRD/receiver must first determine what security restrictions to enforce upon the application. The IRD/receiver takes those restrictions defined by the highest level or "Root" policy 302, for example, "no-lifecycle-control", adds any additional restrictions defined by the "Ad" policy 312, for example "no-modem-access", and finally includes restrictions defined specifically for the "Coca Cola™ App policy" 320, for example "no-cookies." The resulting broadcaster's security policy for the "Coca Cola™" application could, for example, be the union of these policies defined in the HSPO: "no-lifecycle-control, no-modem-access, no-cookies", that is, the node inherits the security attributes of its class and all preceding nodes in the HSPO tree.

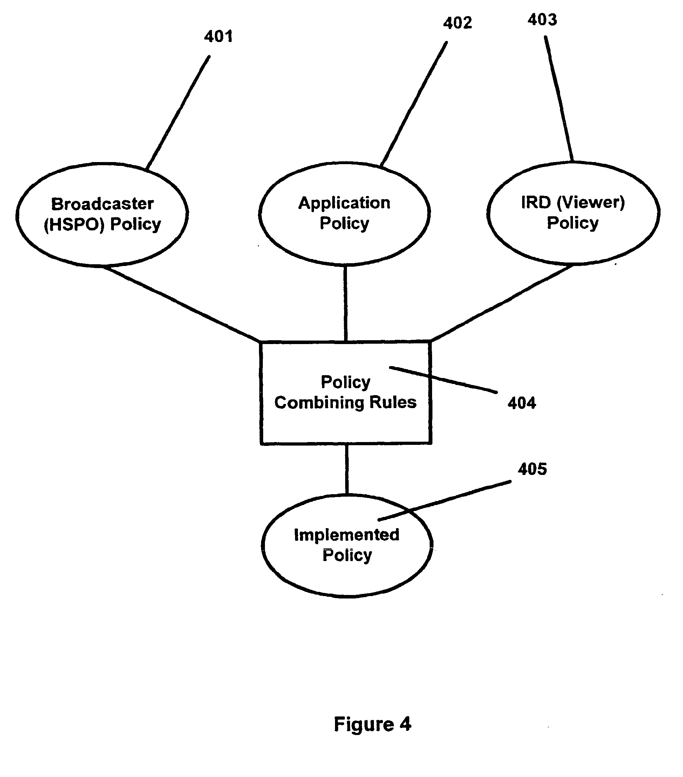

As is shown in Figure 4, the actual implemented security policy 405 imposed upon any application comprises a combination of inherited characteristics of those defined by the HSPO 401, any policy accompanying the application itself 402, and any policy defined on the IRD (e.g. by the viewer) 403.

Returning to Figure 3, as a further illustration, the IRD/receiver may compute a security policy applied to an application associated with a "Ford" advertisement similarly. However, although "Ford" is contained in the "Ad Policy" 312 class, there is no "Ford" policy node under the "Ad" node. In this case, the Ford advertisement would only have the broadcaster restrictions specified by the "Root" 302 and "Ad" 312 nodes, namely "no-lifecycle-control, no-modem-access." Again, these restrictions would then be combined with any access information provided along with the "Ford" advertisement and obtained from the IRD itself to create the resulting policy enforced on the application as described above in conjunction with the description of Figure 4.

Using the HSPO security restrictions may prevent the necessity of transmitting a set of broadcaster security restrictions along with each broadcast program. The HSPO may be more efficient in that an HSPO need be transmitted only once, or programmed into a client/STB. Thereafter, only exceptions to the established HSPO may need to be transmitted for an application. Once an exception is established in the HSPO, it becomes part of the HSPO tree and need not be transmitted again.

HSPO security restrictions may be useful to prevent programs broadcast or downloaded to a client from a server head-end from performing actions considered risky by that server, such as contracting a virus by interaction with the outside world (i.e. the Internet, email or other programs internal or external to the client (e.g., STB)).

HSPO security restrictions may also disable capabilities or access to memory locations and data, which, may be inadvertently accessed due to programming error. The HSPO may also enable access or deny access to encrypted and/or protected data.

In one embodiment, each level of a HSPO structure may be specified by a different entity. For example, at the top level, a head-end, defines a top-level security restriction, such as "no JAVASCRIPT execution" during a program. In addition, a network (e.g., HBO, NBC, ABC, CBS, ESPN, etc.) may add additional security restrictions to the program, (e.g., no modem access to the next network node level in the HSPO). At the next HSPO node level, a program producer may specify an additional security restriction for the program. At the next level, an advertisement producer can specify an additional security restriction for the program or even a more permissive policy for the program than inherited from the HSPO hierarchical structure and so on.

Depending on the existing HSPO and security policy - a more permissive advertisement policy may or may not be honored. In one embodiment, a lower level security object may override an inherited security restriction from a higher level HSPO node.

It is noted that although the embodiments described above have been described as residing in an interactive television environment, it is contemplated that other embodiments may reside in and/or operate in any distributed computer system including a server and a client device. The client device may be a hand held computer, cell phone, personal digital assistant or any device capable of receiving and/or transmitting an electronic signal. The server may be any device capable of transmitting and/or receiving an electronic signal. Further, the embodiments described above may be implemented as a set of instructions conveyed via a carrier medium such as a broadcast signal, or on a computer readable medium, comprising ROM, RAM, CD ROM, Flash or any other computer readable medium, now known or unknown such that when executed cause a computer to implement the embodiments described above.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for specifying and managing a hierarchical security policy in an interactive television system, said method comprising:
formulating a security policy for applications which may execute on a client device of the television system, wherein formulating said policy comprises
(i) identifying a plurality of classes to which said applications may correspond,
(ii) assigning to each of said classes restrictions and/or privileges that a given application within the corresponding class has to access one or more resources of a client device upon which the given application executes, and
(iii) organizing the classes into a hierarchy with two or more levels, the hierarchy comprising parent classes and child classes, wherein a child class of a given parent class represents a subclass of the parent class;
creating a hierarchy security program object (HSPO) (300) that represents said security policy, wherein the HSPO includes a node for each class of the plurality of classes, wherein said nodes are organized as a hierarchical security inheritance structure that corresponds to said hierarchy, each level of the structure including one or more nodes (302, 310, 312, 316, ...) which define a class of applications and a corresponding set of restrictions and/or privileges that a given application within the corresponding class has to access one or more resources of a client device upon which the given application executes, wherein the nodes are structured in parent and/or subordinate node relationships with other nodes, and wherein nodes are configured to inherit restrictions and/or privileges of ancestor nodes whereby restrictions and/or privileges of ancestor nodes are added to those of the inheriting node;
transmitting the HSPO (300) from a server (206) to a client device (212);
storing the transmitted HSPO in a client device;
in response to detecting execution of a first application in the client device:
determining a first class of the plurality of classes to which the first application belongs;
identifying one or more classes and corresponding nodes defined by the HSPO which encompass the first class;
identifying restrictions and/or privileges defined by the identified corresponding nodes;
formulating a set of restrictions and/or privileges, wherein said set of restrictions and/or privileges comprises a union of restrictions and/or privileges defined by the corresponding nodes;
assigning the set of restrictions and/or privileges to the first application; and enforcing the set of restrictions and/or privileges on the first application.

2. One or more computer readable media comprising program instructions for specifying and managing a hierarchical security policy in an interactive television system, wherein the program instructions are executable to:
create a hierarchical security program object (HSPO) (300) that represents a security policy for applications which may execute on a client device of the television system, wherein the HSPO includes a node for each class of the plurality of classes to which said applications may correspond, each of said classes being assigned restrictions and/or privileges that a given application within the corresponding class has to access one or more resources of a client device upon which the given application executes, wherein the classes are organized into a hierarchy with two or more levels, the hierarchy comprising parent classes and child classes, wherein a child class of a given parent class represents a subclass of the parent class;
wherein said nodes are organized as a hierarchy security inheritance structure that corresponds to said hierarchy, each level of the structure including one or more nodes (302, 310, 312, 316, ...) which define a class of applications and a corresponding set of restrictions and/or privileges that a given application within the corresponding class has to access one or more resources of a client device upon which the given application executes, wherein the nodes are structured in parent and/or subordinate node relationships with other nodes, and wherein nodes are configured to inherit restrictions and/or privileges of ancestor nodes;
transmit the HSPO (300) from a server (206) to a client device (212);
store the transmitted HSPO in a client device;
in response to detecting execution of a first application in the client device:
determining a first class of the plurality of classes to which the first application belongs;
identify one or more classes and corresponding nodes defined by the HSPO which encompass the first class;
identify restrictions and/or privileges defined by the identified corresponding nodes;
formulate a set of restrictions and/or privileges, wherein said set of restrictions and/or privileges defined by the corresponding nodes;
assign the set of restrictions and/or privileges to the first application; and
enforce the set of restrictions and/or privileges on the first application.

3. The method of claim 1 or the computer readable media as recited in claim 2, wherein said HSPO is downloaded to a client device via a computer network (211).

4. The method of claim 1 or the computer readable media as recited in claim 2, wherein the HSPO is received in a client device, and wherein the program instructions are further executable to program a default HSPO into the client device.

5. The method of claim 1 or the computer readable media as recited in claim 2, wherein the HSPO defines a second class of restrictions and/or privileges, said second class being a parent class of the first class, and wherein the set of restrictions and/or privileges comprises a union of the first class of restrictions and/or privileges and the second class of restrictions and/or privileges.

6. The method or the computer readable media as recited in claim 5, wherein the first class comprises an advertisement class and the second class comprises a network class.

7. The method or the computer readable media as recited in claim 5, wherein the HSPO classes are defined by a security policy maker (238) located either in the server or in a client device which receives the transmitted HSPO.

8. An interactive television system for specifying and managing a hierarchical security policy, said system comprising:
a server (206) configured to:
create a hierarchical security programme object (HSPO) (300) that represents a security policy for applications which may execute on a client device of the system, wherein the HSPO includes a node for each class of a plurality of classes to which said applications may correspond, each of said classes being assigned restrictions and/or privileges that a given application within the corresponding class has to access one or more resources of a client device upon which the given application executes, wherein the classes are organized into a hierarchy with two or more levels, the hierarchy comprising parent classes and child classes, wherein a child class of a given parent class represents a subclass of the parent class;
wherein said nodes are organized as a hierarchical security inheritance structure that corresponds to said hierarchy, each level of the structure including one or more nodes (302, 310, 312, 316, ...) which define a class of applications and a corresponding set of restrictions and/or privileges that a given application within the corresponding class has to access one or more resources of a client device upon which the given application executes, wherein the nodes are structured in parent and/or subordinate node relationships with other nodes, and wherein nodes are configured to inherit restrictions and/or privileges of ancestor nodes;
transmit the HSPO (300);
a client device (212) configured to:
receive the transmitted HSPO;
store the transmitted HSPO in the client device;
in response to detecting execution of a first application in the client device:
determine a first class of the plurality of classes to which the first application belongs;
identify one or more classes and corresponding nodes defined by the HSPO which encompass the first class;
identify restrictions and/or privileges defined by the identified corresponding nodes;
formulate a set of restrictions and/or privileges, wherein said set of restrictions and/or privileges comprises a union of restrictions and/or privileges defined by the corresponding nodes;
assign the set of restrictions and/or privileges to the first application; and
enforce the set of restrictions and/or privileges on the first application.

9. A device (212) for use in an interactive television system, the device comprising:
a receiver configured to receive a hierarchical security program object (HSPO) (300) that represents a security policy for applications which may execute on the device, wherein the HSPO includes a node for each class of plurality of classes to which said applications may correspond, each of said classes being assigned restrictions and/or privileges that a given application within the corresponding class has to access one or more resources of the device upon which the given application executes, wherein the classes are organized into a hierarchy with two or more levels, the hierarchy comprising parent classes and child classes, wherein a child class of a given parent class represents a subclass of the parent class;
wherein said nodes are organized as a hierarchical security inheritance structure that corresponds to said hierarchy, each level of the structure including one or more nodes (302, 310, 312, 316, ...) which define a class of applications and a corresponding set of restrictions and/or privileges that a given application within the corresponding class has to access one or more resources of the device upon which the given application executes, wherein the nodes are structured in parent and/or subordinate node relationships with other nodes, and wherein nodes are configured to inherit restrictions and/or privileges of ancestor nodes;
storage configures to store the HSPO;
wherein in response to detecting execution of a first application, the device is configured to:
determine a first class of the plurality of classes to which the first application belongs;
identify one or more classes and corresponding nodes defined by the HSPO which encompass the first class;
identify restrictions and/or privileges defined by the identified corresponding nodes;
formulate a set of restrictions and/or privileges, wherein said set of restrictions and/or privileges comprise a union of restrictions and/or privileges defined by the corresponding nodes;
assign the set of restrictions and/or privileges to the first application; and enforce the set of restrictions and/or privileges on the first application.

10. The device as recited in claim 9, wherein the HSPO is received via a computer network (211).

11. The system as recited in claim 8 or the device as recited in claim 9 wherein the HSPO defines a second class of restrictions and/or privileges, said second class being a parent class of the first class, and wherein the set of restrictions and/or privileges comprises a union of the first class of restrictions and/or privileges and the second class of restrictions and/or privileges.

12. The system or the device as recited in claim 11, wherein the first class comprises an advertisement class and the second class comprises a network class.

13. The system or the device as recited in claim 11, wherein the HSPO classes are defined by a security policy maker (238) located either in the server or in a client device which receives the transmitted HSPO.

## Patentansprüche

1. Verfahren zum Vorgeben und Verwalten einer hierarchischen Sicherheitsrichtlinie in einem interaktiven Fernsehsystem, wobei das genannte Verfahren Folgendes beinhaltet:
Formulieren einer Sicherheitsrichtlinie für Anwendungen, die auf einem Client-Gerät des Fernsehsystems laufen können, wobei das Formulieren der genannten Richtlinie Folgendes beinhaltet:
(i) Identifizieren mehrerer Klassen, denen die genannten Anwendungen entsprechen können,
(ii) Zuordnen zu jeder der genannten Klassen Beschränkungen und/oder Privilegien, die eine gegebene Anwendung innerhalb der entsprechenden Klasse hat, um auf ein oder mehrere Betriebsmittel eines Client-Gerätes zuzugreifen, auf dem die gegebene Anwendung läuft, und
(iii) Organisieren der Klassen zu einer Hierarchie mit zwei oder mehr Ebenen, wobei die Hierarchie Stammklassen und Abkömmlingsklassen beinhaltet, wobei eine Abkömmlingsklasse einer gegebenen Stammklasse eine Unterklasse der Stammklasse repräsentiert;
Erzeugen eines Hierarchie-Sicherheitsprogrammobjekts (HSPO) (300), das die genannte Sicherheitsrichtlinie repräsentiert, wobei das HSPO einen Knoten für jede der mehreren Klassen beinhaltet, wobei die genannten Knoten zu einer hierarchischen Sicherheitsvererbungsstruktur organisiert werden, die der genannten Hierarchie entspricht, wobei jede Ebene der Struktur einen oder mehrere Knoten (302, 310, 312, 316, ...) aufweist, die eine Klasse von Anwendungen und einen entsprechenden Satz von Beschränkungen und/oder Privilegien definieren, die eine gegebene Anwendung innerhalb der entsprechenden Klasse hat, um auf ein oder mehrere Betriebsmittel eines Client-Gerätes zuzugreifen, auf dem die gegebene Anwendung läuft, wobei die Knoten in Stamm- und/oder untergeordneten Knotenbeziehungen mit anderen Knoten strukturiert sind, und wobei Knoten so konfiguriert werden, dass sie Beschränkungen und/oder Privilegien von Ahnenknoten erben, so dass Beschränkungen und/oder Privilegien von Ahnenknoten zu denen des erbenden Knotens addiert werden;
Übertragen des HSPO (300) von einem Server (206) zu einem Client-Gerät (212);
Speichern des übertragenen HSPO in einem Client-Gerät;
als Reaktion auf die Erkennung, dass eine erste Anwendung in dem Client-Gerät läuft:
Ermitteln einer ersten der mehreren Klassen, zu denen die erste Anwendung gehört;
Identifizieren von einer oder mehreren Klassen und entsprechenden Knoten, die von dem HSPO definiert werden und die die erste Klasse umfassen;
Identifizieren von Beschränkungen und/oder Privilegien, die von den identifizierten entsprechenden Knoten definiert werden;
Formulieren eines Satzes von Beschränkungen und/oder Privilegien, wobei der genannte Satz von Beschränkungen und/oder Privilegien eine Vereinigung von von den entsprechenden Knoten definierten Beschränkungen und/oder Privilegien umfasst;
Zuweisen des Satzes von Beschränkungen und/oder Privilegien zu der ersten Anwendung; und
Umsetzen des Satzes von Beschränkungen und/oder Privilegien auf der ersten Anwendung.

2. Ein oder mehrere rechnerlesbare Medien, die Programmbefehle zum Vorgeben und Verwalten einer hierarchischen Sicherheitsrichtlinie in einem interaktiven Fernsehsystem umfassen, wobei die Programmbefehle ausgeführt werden können zum:
Erzeugen eines hierarchischen Sicherheitsprogrammobjekts (HSPO) (300), das eine Sicherheitsrichtlinie für Anwendungen repräsentiert, die auf einem Client-Gerät des Fernsehsystems laufen können, wobei das HSPO einen Knoten für jede der mehreren Klassen beinhaltet, denen die genannten Anwendungen entsprechen können, wobei jeder der genannten Klassen Beschränkungen und/oder Privilegien zugewiesen werden, die eine gegebene Anwendung innerhalb der entsprechenden Klasse hat, um auf ein oder mehrere Betriebsmittel eines Client-Gerätes zuzugreifen, auf dem die gegebene Anwendung läuft, wobei die Klassen zu einer Hierarchie mit zwei oder mehr Ebenen organisiert sind, wobei die Hierarchie Stammklassen und Abkömmlingsklassen umfasst, wobei eine Abkömmlingsklasse einer gegebenen Stammklasse eine Unterklasse der Stammklasse repräsentiert;
wobei die genannten Knoten zu einer Hierarchie-Sicherheitsvererbungsstruktur organisiert sind, die der genannten Hierarchie entspricht, wobei jede Ebene der Struktur einen oder mehrere Knoten (302, 310, 312, 316, ...) beinhaltet, die eine Klasse von Anwendungen und einen entsprechenden Satz von Beschränkungen und/oder Privilegien definieren, die eine gegebene Anwendung innerhalb der entsprechenden Klasse hat, um auf ein oder mehrere Betriebsmittel eines Client-Geräts zuzugreifen, auf dem die gegebene Anwendung läuft, wobei die Knoten zu Stamm- und/oder untergeordneten Knotenbeziehungen mit anderen Knoten strukturiert sind, und wobei Knoten zum Erben von Beschränkungen und/oder Privilegien von Ahnenknoten konfiguriert sind;
Übertragen des HSPO (300) von einem Server (206) zu einem Client-Gerät (212);
Speichern des übertragenen HSPO in einem Client-Gerät;
als Reaktion auf die Erkennung, dass eine erste Anwendung in dem Client-Gerät läuft:
Ermitteln einer ersten der mehreren Klassen, zu denen die erste Anwendung gehört;
Identifizieren von einer oder mehreren Klassen und entsprechenden Knoten, die von dem HSPO definiert werden und die die erste Klasse umfassen;
Identifizieren von Beschränkungen und/oder Privilegien, die von den identifizierten entsprechenden Knoten definiert werden;
Formulieren eines Satzes von Beschränkungen und/oder Privilegien, wobei der genannte Satz von Beschränkungen und/oder Privilegien [*Lakune*] definiert von den entsprechenden Knoten;
Zuweisen des Satzes von Beschränkungen und/oder Privilegien zu der ersten Anwendung; und
Umsetzen des Satzes von Beschränkungen und/oder Privilegien auf der ersten Anwendung.

3. Verfahren nach Anspruch 1 oder rechnerlesbares Medium nach Anspruch 2, wobei das genannte HSPO über ein Computernetzwerk (211) auf ein Client-Gerät heruntergeladen wird.

4. Verfahren nach Anspruch 1 oder rechnerlesbares Medium nach Anspruch 2, wobei das HSPO in einem Client-Gerät empfangen wird und wobei die Programmbefehle ferner ausgeführt werden können, um ein Vorgabe-HSPO in das Client-Gerät zu programmieren.

5. Verfahren nach Anspruch 1 oder rechnerlesbares Medium nach Anspruch 2, wobei das HSPO eine zweite Klasse von Beschränkungen und/oder Privilegien definiert, wobei die genannte zweite Klasse eine Stammklasse der ersten Klasse ist und wobei der Satz von Beschränkungen und/oder Privilegien eine Vereinigung der ersten Klasse von Beschränkungen und/oder Privilegien und der zweiten Klasse von Beschränkungen und/oder Privilegien umfasst.

6. Verfahren oder rechnerlesbares Medium nach Anspruch 5, wobei die erste Klasse eine Werbungsklasse und die zweite Klasse eine Netzwerkklasse umfasst.

7. Verfahren oder rechnerlesbares Medium nach Anspruch 5, wobei die HSPO-Klassen von einem Sicherheitsrichtlinien-Aufstellmodul (238) definiert werden, das sich entweder im Server oder in einem Client-Gerät befindet, der/das das übertragene HSPO empfängt.

8. Interaktives Fernsehsystem zum Vorgeben und Verwalten einer hierarchischen Sicherheitsrichtlinie, wobei das genannte System Folgendes umfasst:
einen Server (206) konfiguriert zum:
Erzeugen eines hierarchischen Sicherheitsprogrammobjekts (HSPO) (300), das eine Sicherheitsrichtlinie für Anwendungen repräsentiert, die auf einem Client-Gerät des Systems laufen können, wobei das HSPO einen Knoten für jede der mehreren Klassen beinhaltet, denen die genannten Anwendungen entsprechen können, wobei jeder der genannten Klassen Beschränkungen und/oder Privilegien zugewiesen werden, die eine gegebene Anwendung innerhalb der entsprechenden Klasse hat, um auf ein oder mehrere Betriebsmittel eines Client-Gerätes zuzugreifen, auf dem die gegebene Anwendung läuft, wobei die Klassen zu einer Hierarchie mit zwei oder mehr Ebenen organisiert sind, wobei die Hierarchie Stammklassen und Abkömmlingsklassen umfasst, wobei eine Abkömmlingsklasse einer gegebenen Stammklasse eine Unterklasse der Stammklassen repräsentiert;
wobei die genannten Knoten zu einer Hierarchie-Sicherheitsvererbungsstruktur organisiert sind, die der genannten Hierarchie entspricht, wobei jede Ebene der Struktur einen oder mehrere Knoten (302, 310, 312, 316, ...) beinhaltet, die eine Klasse von Anwendungen und einen entsprechenden Satz von Beschränkungen und/oder Privilegien definieren, die eine gegebene Anwendung innerhalb der entsprechenden Klasse hat, um auf ein oder mehrere Betriebsmittel eines Client-Geräts zuzugreifen, auf dem die gegebene Anwendung läuft, wobei die Knoten zu Stamm- und/oder untergeordneten Knotenbeziehungen mit anderen Knoten strukturiert sind, und wobei Knoten zum Erben von Beschränkungen und/oder Privilegien von Ahnenknoten konfiguriert sind;
Übertragen des HSPO (300);
ein Client-Gerät (212) konfiguriert zum:
Empfangen des übertragenen HSPO;
Speichern des übertragenen HSPO in dem Client-Gerät;
als Reaktion auf die Erkennung, dass eine erste Anwendung in dem Client-Gerät läuft:
Ermitteln einer ersten der mehreren Klassen, zu denen die erste Anwendung gehört;
Identifizieren von einer oder mehreren Klassen und entsprechenden Knoten, die von dem HSPO definiert werden und die die erste Klasse umfassen;
Identifizieren von Beschränkungen und/oder Privilegien, die von den identifizierten entsprechenden Knoten definiert werden;
Formulieren eines Satzes von Beschränkungen und/oder Privilegien, wobei der genannte Satz von Beschränkungen und/oder Privilegien eine Vereinigung von von den entsprechenden Knoten definierten Beschränkungen und/oder Privilegien umfasst;
Zuweisen des Satzes von Beschränkungen und/oder Privilegien zu der ersten Anwendung; und
Umsetzen des Satzes von Beschränkungen und/oder Privilegien auf der ersten Anwendung.

9. Gerät (212) für die Verwendung in einem interaktiven Fernsehsystem, wobei das Gerät Folgendes umfasst:
einen Empfänger, der zum Empfangen eines hierarchischen Sicherheitsprogrammobjekts (HSPO) (300) konfiguriert ist, das eine Sicherheitsrichtlinie für Anwendungen repräsentiert, die auf dem Gerät laufen können, wobei das HSPO einen Knoten für jede von mehreren Klassen beinhaltet, denen die genannten Anwendungen entsprechen können, wobei jeder der genannten Klassen Beschränkungen und/oder Privilegien zugewiesen werden, die eine gegebene Anwendung innerhalb der entsprechenden Klasse hat, um auf ein oder mehrere Betriebsmittel des Gerätes zuzugreifen, auf dem die gegebene Anwendung abläuft, wobei die Klassen zu einer Hierarchie mit zwei oder mehr Ebenen organisiert sind, wobei die Hierarchie Stammklassen und Abkömmlingsklassen umfasst, wobei eine Abkömmlingsklasse einer gegebenen Stammklasse eine Unterklasse der Stammklasse repräsentiert;
wobei die genannten Knoten zu einer Hierarchie-Sicherheitsvererbungsstruktur organisiert sind, die der genannten Hierarchie entspricht, wobei jede Ebene der Struktur einen oder mehrere Knoten (302, 310, 312, 316, ...) beinhaltet, die eine Klasse von Anwendungen und einen entsprechenden Satz von Beschränkungen und/oder Privilegien definieren, die eine gegebene Anwendung innerhalb der entsprechenden Klasse hat, um auf ein oder mehrere Betriebsmittel des Geräts zuzugreifen, auf dem die gegebene Anwendung läuft, wobei die Knoten zu Stamm- und/oder untergeordneten Knotenbeziehungen mit anderen Knoten strukturiert sind, und wobei Knoten zum Erben von Beschränkungen und/oder Privilegien von Ahnenknoten konfiguriert sind;
einen Speicher konfiguriert zum Speichern des HSPO;
wobei das Gerät so konfiguriert ist, dass es als Reaktion auf die Erkennung, dass eine erste Anwendung läuft, Folgendes ausführt:
Ermitteln einer ersten der mehreren Klassen, zu denen die erste Anwendung gehört;
Identifizieren von einer oder mehreren Klassen und entsprechenden Knoten, die von dem HSPO definiert werden und die die erste Klasse umfassen;
Identifizieren von Beschränkungen und/oder Privilegien, die von den identifizierten entsprechenden Knoten definiert werden;
Formulieren eines Satzes von Beschränkungen und/oder Privilegien, wobei der genannte Satz von Beschränkungen und/oder Privilegien eine Vereinigung von von den entsprechenden Knoten definierten Beschränkungen und/oder Privilegien umfasst;
Zuweisen des Satzes von Beschränkungen und/oder Privilegien zu der ersten Anwendung; und
Umsetzen des Satzes von Beschränkungen und/oder Privilegien auf der ersten Anwendung.

10. Gerät nach Anspruch 9, wobei das HSPO über ein Computernetzwerk (211) empfangen wird.

11. System nach Anspruch 8 oder Gerät nach Anspruch 9, wobei das HSPO eine zweite Klasse von Beschränkungen und/oder Privilegien definiert, wobei die genannte zweite Klasse eine Stammklasse der ersten Klasse ist, und wobei der Satz von Beschränkungen und/oder Privilegien eine Vereinigung der ersten Klasse von Beschränkungen und/oder Privilegien und der zweiten Klasse von Beschränkungen und/oder Privilegien umfasst.

12. System oder Gerät nach Anspruch 11, wobei die erste Klasse eine Werbungsklasse und die zweite Klasse eine Netzwerkklasse umfasst.

13. System oder Gerät nach Anspruch 11, wobei die HSPO-Klassen durch ein Sicherheitsrichtlinien-Aufstellmodul (238) definiert werden, das sich entweder im Server oder in einem Client-Gerät befindet, der/das das übertragene HSPO empfängt.

## Revendications

1. Un procédé de spécification et de gestion d'une politique de sécurité hiérarchique dans un système de télévision interactive, le procédé comprenant :
la formulation d'une politique de sécurité pour des applications qui peuvent être exécutées sur un dispositif client du système de télévision, où la formulation de ladite politique comprend
(i) l'identification d'une pluralité de classes auxquelles lesdites applications peuvent correspondre,
(ii) l'attribution à chacune desdites classes de restrictions et/ou privilèges qu'une application donnée à l'intérieur de la classe correspondante possède pour accéder à une ou plusieurs ressources d'un dispositif client, sur lequel l'application donnée est exécutée, et
(iii) l'organisation des classes en une hiérarchie avec deux ou plus niveaux, la hiérarchie comprenant des classes parents et des classes enfants, où une classe enfant d'une classe parent donnée représente une sous-classe de la classe parent,
la création d'un objet programme de sécurité hiérarchique (HSPO) (300) qui représente ladite politique de sécurité, où le HSPO contient un noeud pour chaque classe de la pluralité de classes, où lesdits noeuds sont organisés sous la forme d'une structure d'héritage de sécurité hiérarchique qui correspond à ladite hiérarchie, chaque niveau de la structure comprenant un ou plusieurs noeuds (302, 310, 312, 316, ...) qui définissent une classe d'applications et un ensemble correspondant de restrictions et/ou privilèges qu'une application donnée à l'intérieur de la classe correspondante possède pour accéder à une ou plusieurs ressources d'un dispositif client, sur lequel l'application donnée est exécutée, où les noeuds sont structurés selon des relations de noeud parent et/ou subordonné avec d'autres noeuds, et où les noeuds sont configurés de façon à hériter des restrictions et/ou privilèges de noeuds ancêtres, grâce à quoi les restrictions et/ou privilèges des noeuds ancêtres sont ajoutés à ceux du noeud héritant,
la transmission du HSPO (300) d'un serveur (206) à un dispositif client (212),
la mise en mémoire du HSPO transmis sur un dispositif client,
en réponse à la détection de l'exécution d'une première application sur le dispositif client :
la détermination d'une première classe de la pluralité de classes à laquelle la première application appartient,
l'identification d'une ou plusieurs classes et des noeuds correspondants définis par le HSPO qui recouvrent la première classe,
l'identification de restrictions et/ou privilèges définis par les noeuds correspondants identifiés,
la formulation d'un ensemble de restrictions et/ou privilèges, où ledit ensemble de restrictions et/ou privilèges comprend une union de restrictions et/ou privilèges définis par les noeuds correspondants,
l'attribution de l'ensemble de restrictions et/ou privilèges à la première application, et l'application de l'ensemble de restrictions et/ou privilèges sur la première application.

2. Un ou plusieurs supports lisibles par ordinateur contenant des instructions de programme destinées à spécifier et à gérer une politique de sécurité hiérarchique dans un système de télévision interactive, où les instructions de programme sont exécutables afin de :
créer un objet programme de sécurité hiérarchique (HSPO) (300) qui représente une politique de sécurité pour des applications qui peuvent être exécutées sur un dispositif client du système de télévision, où le HSPO contient un noeud pour chaque classe de la pluralité de classes auxquelles lesdites applications peuvent correspondre, à chacune desdites classes étant attribués des restrictions et/ou privilèges qu'une application donnée à l'intérieur de la classe correspondante possède pour accéder à une ou plusieurs ressources d'un dispositif client, sur lequel l'application donnée est exécutée, où les classes sont organisées en une hiérarchie avec deux ou plus niveaux, la hiérarchie comprenant des classes parents et des classes enfants, où une classe enfant d'une classe parent donnée représente une sous-classe de la classe parent,
où lesdits noeuds sont organisés sous la forme d'une structure d'héritage de sécurité hiérarchique qui correspond à ladite hiérarchie, chaque niveau de la structure comprenant un ou plusieurs noeuds (302, 310, 312, 316, ...) qui définissent une classe d'applications et un ensemble correspondant de restrictions et/ou privilèges qu'une application donnée à l'intérieur de la classe correspondante possède pour accéder à une ou plusieurs ressources d'un dispositif client, sur lequel l'application donnée est exécutée, où les noeuds sont structurés selon des relations de noeud parent et/ou subordonné avec d'autres noeuds, et où les noeuds sont configurés de façon à hériter des restrictions et/ou privilèges de noeuds ancêtres,
transmettre le HSPO (300) d'un serveur (206) à un dispositif client (212), placer le HSPO transmis en mémoire sur un dispositif client,
en réponse à la détection de l'exécution d'une première application sur le dispositif client :
déterminer une première classe de la pluralité de classes à laquelle la première application appartient,
identifier une ou plusieurs classes et les noeuds correspondants définis par le HSPO qui recouvrent la première classe,
identifier des restrictions et/ou privilèges définis par les noeuds correspondants identifiés,
formuler un ensemble de restrictions et/ou privilèges, où ledit ensemble de restrictions et/ou privilèges [*lacune*] défini par les noeuds correspondants,
attribuer l'ensemble de restrictions et/ou privilèges à la première application, et
appliquer l'ensemble de restrictions et/ou privilèges sur la première application.

3. Le procédé selon la Revendication 1 ou le support lisible par ordinateur selon la Revendication 2, où ledit HSPO est téléchargé vers un dispositif client par l'intermédiaire d'un réseau informatique (211).

4. Le procédé selon la Revendication 1 ou le support lisible par ordinateur selon la Revendication 2, où le HSPO est reçu dans un dispositif client, et où les instructions de programme sont en outre exécutables de façon à programmer un HSPO par défaut dans le dispositif client.

5. Le procédé selon la Revendication 1 ou le support lisible par ordinateur selon la Revendication 2, où le HSPO définit une deuxième classe de restrictions et/ou privilèges, ladite deuxième classe étant une classe parent de la première classe, et où l'ensemble de restrictions et/ou privilèges comprend une union de la première classe de restrictions et/ou privilèges et de la deuxième classe de restrictions et/ou privilèges.

6. Le procédé ou le support lisible par ordinateur selon la Revendication 5, où la première classe comprend une classe de publicité et la deuxième classe comprend une classe de réseau.

7. Le procédé ou le support lisible par ordinateur selon la Revendication 5, où les classes HSPO sont définies par un concepteur de politiques de sécurité (238) installé soit sur le serveur ou un dispositif client qui reçoit le HSPO transmis.

8. Un système de télévision interactive destiné à la spécification et à la gestion d'une politique de sécurité hiérarchique, ledit système comprenant :
un serveur (206) configuré de façon à :
créer un objet programme de sécurité hiérarchique (HSPO) (300) qui représente une politique de sécurité pour des applications qui peuvent être exécutées sur un dispositif client du système, où le HSPO contient un noeud pour chaque classe d'une pluralité de classes auxquelles lesdites applications peuvent correspondre, à chacune desdites classes étant attribués des restrictions et/ou privilèges qu'une application donnée à l'intérieur de la classe correspondante possède pour accéder à une ou plusieurs ressources d'un dispositif client, sur lequel l'application donnée est exécutée, où les classes sont organisées en une hiérarchie avec deux ou plus niveaux, la hiérarchie comprenant des classes parents et des classes enfants, où une classe enfant d'une classe parent donnée représente une sous-classe de la classe parent,
où lesdits noeuds sont organisés sous la forme d'une structure d'héritage de sécurité hiérarchique qui correspond à ladite hiérarchie, chaque niveau de la structure comprenant un ou plusieurs noeuds (302, 310, 312, 316, ...) qui définissent une classe d'applications et un ensemble correspondant de restrictions et/ou privilèges qu'une application donnée à l'intérieur de la classe correspondante possède pour accéder à une ou plusieurs ressources d'un dispositif client, sur lequel l'application donnée est exécutée, où les noeuds sont structurés selon des relations de noeud parent et/ou subordonné avec d'autres noeuds, et où les noeuds sont configurés de façon à hériter des restrictions et/ou privilèges de noeuds ancêtres,
transmettre le HSPO (300),
un dispositif client (212) configuré de façon à :
recevoir le HSPO transmis,
placer le HSPO transmis en mémoire sur le dispositif client,
en réponse à la détection de l'exécution d'une première application sur le dispositif client :
déterminer une première classe de la pluralité de classes à laquelle la première application appartient,
identifier une ou plusieurs classes et les noeuds correspondants définis par le HSPO qui recouvrent la première classe,
identifier des restrictions et/ou privilèges définis par les noeuds correspondants identifiés,
formuler un ensemble de restrictions et/ou privilèges, où ledit ensemble de restrictions et/ou privilèges comprend une union de restrictions et/ou privilèges définis par les noeuds correspondants,
attribuer l'ensemble de restrictions et/ou privilèges à la première application, et
appliquer l'ensemble de restrictions et/ou privilèges sur la première application.

9. Un dispositif (212) destiné à une utilisation dans un système de télévision interactive, le dispositif comprenant :
un récepteur configuré de façon à recevoir un objet programme de sécurité hiérarchique (HSPO) (300) qui représente une politique de sécurité pour des applications qui peuvent être exécutées sur le dispositif, où le HSPO contient un noeud pour chaque classe de la pluralité de classes auxquelles lesdites applications peuvent correspondre, à chacune desdites classes étant attribués des restrictions et/ou privilèges qu'une application donnée à l'intérieur de la classe correspondante possède pour accéder à une ou plusieurs ressources d'un dispositif client, sur lequel l'application donnée est exécutée, où les classes sont organisées en une hiérarchie avec deux ou plus niveaux, la hiérarchie comprenant des classes parents et des classes enfants, où une classe enfant d'une classe parent donnée représente une sous-classe de la classe parent,
où lesdits noeuds sont organisés sous la forme d'une structure d'héritage de sécurité hiérarchique qui correspond à ladite hiérarchie, chaque niveau de la structure comprenant un ou plusieurs noeuds (302, 310, 312, 315, ...) qui définissent une classe d'applications et un ensemble correspondant de restrictions et/ou privilèges qu'une application donnée à l'intérieur de la classe correspondante possède pour accéder à une ou plusieurs ressources du dispositif, après quoi l'application donnée est exécutée, où les noeuds sont structurés selon des relations de noeud parent et/ou subordonné avec d'autres noeuds, et où les noeuds sont configurés de façon à hériter des restrictions et/ou privilèges de noeuds ancêtres,
une mémoire configurée de façon à conserver en mémoire le HSPO, où, en réponse à la détection de l'exécution d'une première application, le dispositif est configuré de façon à :
déterminer une première classe de la pluralité de classes à laquelle la première application appartient,
identifier une ou plusieurs classes et les noeuds correspondants définis par le HSPO qui recouvrent la première classe,
identifier des restrictions et/ou privilèges définis par les noeuds correspondants identifiés,
formuler un ensemble de restrictions et/ou privilèges, où ledit ensemble de restrictions et/ou privilèges comprend une union de restrictions et/ou privilèges définis par les noeuds correspondants,
attribuer l'ensemble de restrictions et/ou privilèges à la première application, et appliquer l'ensemble de restrictions et/ou privilèges sur la première application.

10. Le dispositif selon la Revendication 9, où le HSPO est reçu par l'intermédiaire d'un réseau informatique (211).

11. Le système selon la Revendication 8 ou le dispositif selon la Revendication 9, où le HSPO définit une deuxième classe de restrictions et/ou privilèges, ladite deuxième classe étant une classe parent de la première classe, et où l'ensemble de restrictions et/ou privilèges comprend une union de la première classe de restrictions et/ou privilèges et de la deuxième classe de restrictions et/ou privilèges.

12. Le système ou le dispositif selon la Revendication 11, où la première classe comprend une classe de publicité et la deuxième classe comprend une classe de réseau.

13. Le système ou le dispositif selon la Revendication 11, où les classes HSPO sont définies par un concepteur de politiques de sécurité (238) installé soit sur le serveur ou sur un dispositif client qui reçoit le HSPO transmis.
